# FASCICULE DE BREVET EUROPEEN

(11) **EP 3 983 212 B1**
(45) Date de publication et mention de la délivrance du brevet: **30.08.2023**
(21) Numéro de dépôt: 20742806.1
(22) Date de dépôt: 12.06.2020
(51) Int. Cl.: B29D 30/06, B29C 33/44

(54) **MOULE EN DEUX PARTIES POUR LA VULCANISATION DE PNEUMATIQUES**
ZWEITEILIGE FORM ZUM VULKANISIEREN VON REIFEN
TWO-PART MOULD FOR VULCANISING TYRES

(30) Priorité: 14.06.2019 FR 1906357
(43) Date de publication de la demande: 20.04.2022
(73) Titulaire: COMPAGNIE GENERALE DES ETABLISSEMENTS MICHELIN, 63040 Clermont-Ferrand (FR)
(72) Inventeur: FERRI, Johan, 63040 Clermont-Ferrand CEDEX 9 (FR); LEPRETRE, Jérôme, 63040 Clermont-Ferrand CEDEX 9 (FR)
(74) Mandataire: Noel, Luminita
(86) Numéro de dépôt international: PCT/FR2020/051004
(87) Numéro de publication internationale: WO 2020/249911

(56) Documents cités:
- EP-A1- 0 873 851
- EP-A1- 1 479 508

## Description

La présente invention concerne un moule en deux parties pour la vulcanisation de pneumatiques et, plus particulièrement, pour la vulcanisation de pneumatiques dont la bande de roulement comporte des entailles transversales.

La fabrication d'un pneumatique comprend une étape de cuisson, pendant laquelle une ébauche de pneumatique est moulée et vulcanisée pour donner au pneumatique ses caractéristiques mécaniques, sa géométrie et son aspect final.

La vulcanisation du pneumatique s'effectue dans un moule pour la vulcanisation de pneumatiques comprenant plusieurs parties. Les différentes parties du moule sont mobiles entre une position d'ouverture, dans laquelle elles sont éloignées les unes des autres de manière à permettre l'introduction ou l'extraction d'un pneumatique, et une position de fermeture, dans laquelle elles sont en contact les unes avec les autres, tout en formant une surface interne de moulage destinée à former la surface externe d'un pneumatique.

On connait plus particulièrement un moule en deux parties comprenant un axe central, une partie supérieure et une partie inférieure. Chaque partie du moule réalise la surface externe d'un des deux flancs et d'une partie de la bande de roulement du pneumatique (sculpture). La partie inférieure et la partie supérieure sont mobiles axialement entre la position d'ouverture et la position de fermeture. En positon de fermeture, la partie inférieure et la partie supérieure sont jointives le long d'un contour appelé ligne de joint. La ligne de joint est généralement inscrite dans un plan médian de la surface radialement interne du moule, et de forme sensiblement circulaire.

Le moule en deux parties présente l'avantage d'être de construction particulièrement simple.

Toutefois, l'emboitage du pneumatique, lors de la fermeture du moule, et son démoulage, lors de l'ouverture du moule, entrainent la déformation de la bande de roulement du pneumatique, au risque de faire fluer la gomme composant la bande de roulement, ou, de déplacer les nappes de renforts entrant dans la composition de la structure interne du pneumatique.

Les développements de pneumatiques intègrent des pratiques de conception visant notamment à prévoir une sculpture de pneumatique adaptée au démoulage sur un moule en deux parties. Par exemples, les motifs comportant des contre-dépouilles sont autorisés sur la sculpture dans la limite où leurs démoulages ne provoquent pas de déformation élastique du pneumatique endommageant sa structure interne ; les mouvements relatifs entre les deux parties du moule et le pneumatique suivent des trajectoires sensiblement axiales ou hélicoïdales, et symétriques par rapport au plan médian du pneumatique ; le sommet du pneumatique comporte un profil radialement bombé.

Ces pratiques de conception ont pour conséquence de limiter grandement la variété et la disposition des motifs formant la sculpture d'un pneumatique.

On connait de la demande EP1479508 un moule en deux parties pour la vulcanisation de pneumatiques comportant une ligne de joint déviant du plan médian de la surface radialement interne du moule. L'adaptation de la ligne de joint permet d'envisager le démoulage axial de motifs s'étendant au-delà dudit plan.

Toutefois, l'adaptation de la ligne de joint ne permet pas d'élargir la variété des motifs formant la sculpture d'un pneumatique.

Par ailleurs, les moules en deux parties sont particulièrement adaptés pour la vulcanisation des pneumatiques qui comportent des motifs simples, tels les pneumatiques de type agricole.

Or, les développements récents des pneumatiques agricoles visant désormais à intégrer des entailles s'étendant transversalement au centre de la bande de roulement, c'est un objectif de l'invention de proposer un moule en deux parties permettant le démoulage desdits pneumatiques.

Cet objectif est atteint par l'invention qui propose un moule pour la vulcanisation de pneumatiques comprenant un axe central, une partie supérieure, et une partie inférieure. Le moule comporte une surface radialement interne de moulage destinée à former la surface externe de tout ou partie de la bande de roulement du pneumatique. La partie supérieure et la partie inférieure sont mobiles axialement entre une position d'ouverture et une position de fermeture dans laquelle la partie inférieure et la partie supérieure sont jointives le long d'une ligne de joint divisant la surface radialement interne en deux parties. Au moins une des deux parties de la surface radialement interne comporte au moins un motif comprenant au moins un élément en creux et un élément en protubérance Le moule est **caractérisé en ce que** au moins une partie de moule comporte au moins une lamelle et, de préférence, chaque partie de moule comporte une pluralité de lamelles, tout ou partie desdites lamelles s'étendant sensiblement axialement ou hélicoïdalement sur la surface radialement interne du moule, tout ou partie desdites lamelles étant :
- contiguës à une de leurs extrémités avec l'élément en protubérance et contiguës à l'autre de leurs extrémités avec l'élément en creux ou avec l'autre partie du moule,
- mobiles par rapport au pneumatique dans le sillage de l'élément en protubérance, lors de l'ouverture du moule.

Une lamelle est destinée à former une entaille sur la surface externe de la bande de roulement du pneumatique. L'entaille ainsi formée sur la sculpture du pneumatique s'étend transversalement.

L'absence d'élément en creux entre une lamelle et l'élément en protubérance permet d'éviter qu'une lamelle sectionne la gomme de la bande de roulement du pneumatique. Le démoulage du pneumatique s'en trouve facilité. De plus, les déformations excessives de la bande de roulement du pneumatique, lors du démoulage, sont ainsi évitées. Enfin, les lamelles sont moins sollicitées, et la fréquence des interventions nécessaires à leur réparation est réduite.

L'élément en protubérance auquel une des extrémités de ladite lamelle est contiguë suit une trajectoire de démoulage donnée. Ladite lamelle est mobile par rapport au pneumatique à la suite d'un élément en protubérance. Ladite lamelle est disposée de telle manière qu'elle se démoule dans le volume libéré par ledit élément en protubérance lors de son démoulage.

L'invention a également pour objet un procédé de vulcanisation d'un pneumatique utilisant un moule pour la vulcanisation de pneumatique selon l'invention.

Enfin, l'invention a pour objet un pneumatique obtenu par un procédé de vulcanisation d'un pneumatique selon l'invention.

L'invention sera mieux comprise grâce à la suite de la description, qui s'appuie sur les figures suivantes :
- la figure 1 est une vue simplifiée en coupe radiale d'un moule en deux parties selon l'invention ;
- la figure 2 est une vue simplifiée de certains éléments du moule de la figure 1 ;
- la figure 3 est une vue en perspective d'une partie du moule de la figure 1 dans une position intermédiaire entre une position d'ouverture et une position de fermeture du moule ;
- la figure 4 est une vue en perspective d'une partie du moule de la figure 1 dans une position de fermeture.

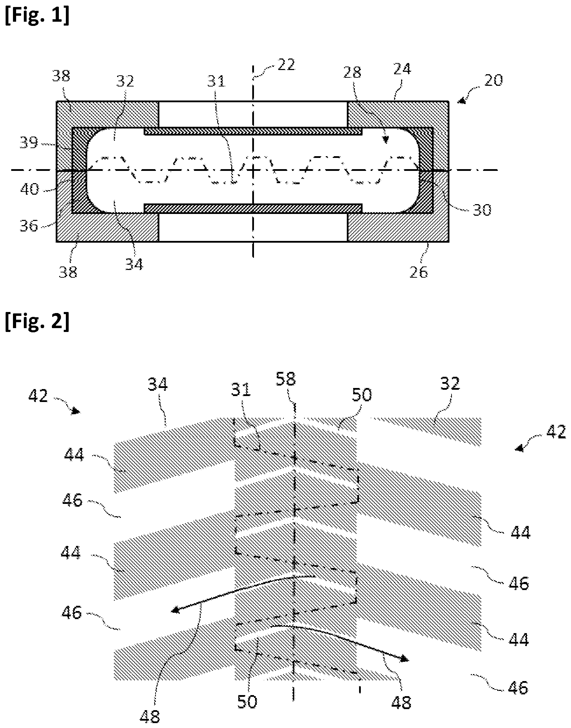

La figure 1 illustre de manière simplifiée un moule 20 en deux parties pour la vulcanisation de pneumatiques, dans une position de fermeture.

Dans toute la suite et sauf indication contraire, une direction axiale désigne une direction parallèle à un axe central 22 du moule, un plan axial désigne un plan perpendiculaire à l'axe central du moule, une direction transversale désigne une direction parallèle à un axe de rotation du pneumatique cuit dans ledit moule, une direction radiale désigne une direction perpendiculaire à l'axe central, un plan radial désigne un plan contenant l'axe central et une direction radiale, et une direction circonférentielle désigne une direction perpendiculaire à une direction radiale et à une direction axiale.

Un moule 20 en deux parties comprend l'axe central 22, une partie supérieure 24 et une partie inférieure 26. La partie inférieure et la partie supérieure sont mobiles axialement entre une position d'ouverture, dans laquelle elles sont éloignées l'une de l'autre de manière à permettre l'introduction ou l'extraction d'un pneumatique, et une position de fermeture, dans laquelle elles sont en contact l'une avec l'autre, de manière à former une surface interne de moulage 28 destinée à former la surface externe d'un pneumatique. La surface interne du moule comprend une surface radialement interne 30 formant la surface externe de tout ou partie de de la bande de roulement du pneumatique (sculpture). En position de fermeture, la partie supérieure 24 et la partie inférieure 26 sont jointives le long d'un contour appelé ligne de joint 31, divisant la surface radialement interne 30 en deux parties 32, 34.

Chaque partie du moule 24, 26 comprend une garniture 36 formant une des deux parties 32, 34 de la surface radialement interne 30, et une coquille 38 portant la garniture et d'autres éléments de moulage destinés à former le reste de la surface interne de moulage. La garniture comprend une pluralité d'éléments de garniture 39 disposés circonférentiellement de manière à former un anneau. Un élément de garniture est en appui par une surface radialement externe dans une gorge 40 de la coquille.

La figure 2 illustre partiellement et de manière simplifiée la surface radialement interne 30 du moule 20 selon l'invention.

Au moins une des deux parties 32, 34 de la surface radialement interne 30 comporte au moins un motif 42 comprenant au moins un élément en creux 44 et un élément en protubérance 46. A titre d'exemple, les deux parties de la surface radialement interne comportent une pluralité de motifs. Un motif peut comporter un élément en creux et un élément en protubérance, ou une pluralité d'éléments en creux et une pluralité d'éléments en protubérance.

Par « élément en creux », on entend une forme en creux, généralement massive, située à la surface radialement interne d'un moule qui, éventuellement, délimite, englobe ou est contigüe à un élément en protubérance 46. A titre d'exemple, un élément en creux 44 prend la forme d'une cavité parallélépipédique ou d'un sillon s'étendant circonférentiellement et/ou axialement.

Par « élément en protubérance », on entend une forme en protubérance, généralement massive, située à la surface radialement interne d'un moule qui, éventuellement, délimite, englobe ou est contigüe à un élément en creux 44. A titre d'exemple, un élément en protubérance 46 prend la forme d'une saillie parallélépipédique, d'un cordon ou d'une lame s'étendant circonférentiellement et/ou axialement.

La forme et la disposition d'un élément en creux 44 ou d'un élément en protubérance 46, sont adaptées au démoulage sur un moule 20 en deux parties. Ainsi, un motif 42 est conçu de telle manière que, lors de l'ouverture du moule, le mouvement relatif entre le moule à l'endroit du motif et le pneumatique suit une trajectoire donnée, appelée trajectoire de démoulage 48.

Chaque motif 42 suit une trajectoire de démoulage 48 sensiblement identique, et chaque motif peut être répété circonférentiellement sur la surface radialement interne 30, de telle manière que le mouvement relatif entre le moule et le pneumatique est sensiblement uniforme. A titre d'exemple, chaque partie du moule comporte un motif répété circonférentiellement.

Les trajectoires de démoulage 48 des deux parties 24, 26 du moule par rapport au pneumatique sont symétriques par rapport à un plan axial du moule, ledit plan axial étant, de préférence, coplanaire au plan médian 58 du moule.

Les trajectoires de démoulage 48 des deux parties 24, 26 du moule par rapport au pneumatique suivent des trajectoires sensiblement axiales ou hélicoïdales.

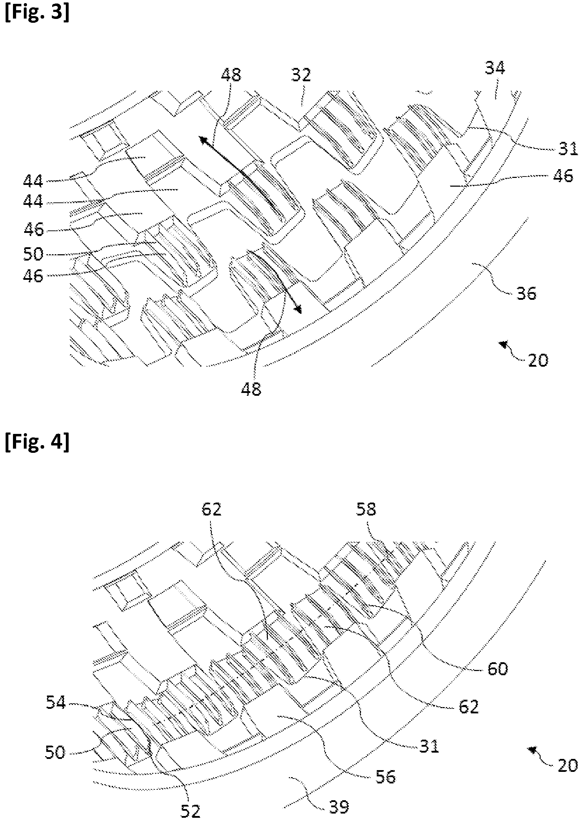

La figure 3 et la figure 4 illustrent un moule 20 en deux parties selon un mode préféré de réalisation de l'invention, respectivement dans une position d'ouverture partielle, et dans une position de fermeture.

Selon l'invention, au moins une partie 24, 26 du moule comporte au moins une lamelle 50. De préférence, chaque partie du moule comporte une pluralité de lamelles.

Une lamelle 50 prend la forme d'un élément en protubérance 46, long et fin s'étendant depuis la surface radialement interne du moule, de préférence, suivant un profil sensiblement radial 52.

Par « élément fin », on entend que l'épaisseur d'une lamelle 50 est inférieure ou égale à 50% de sa profondeur, et au maximum égale à 15 mm. De préférence, l'épaisseur de la lamelle est inférieure ou égale à 25% de sa profondeur, et au maximum égale à 5 mm. La profondeur de la lamelle est comprise dans un domaine allant de 8 à 100 mm.

Par « élément long », on entend qu'une lamelle 50 s'étend le long d'un profil longitudinal 54 s'étendant sur la surface radialement interne 30 du moule.

A titre d'exemple, le profil radial 52 ou le profil longitudinal 54 d'une lamelle 50 peut être rectiligne, bombé, ondulé, comprendre des déflections ou des brisures.

Une lamelle 50 peut être réalisée dans un matériau métallique par tout procédé approprié. A titre d'exemple, la lamelle est réalisée par un procédé de consolidation par fusion sélective, ou par un procédé d'usinage.

Une lamelle 50 est destinée à former une entaille sur la surface externe de la bande de roulement du pneumatique.

Une lamelle 50 est montée avec le corps 56 d'un élément de garniture 39. A titre d'exemple, la lamelle peut être assemblée au corps par tout moyen d'assemblage adéquat et, de préférence, par imbrication du corps de l'élément de garniture autour de la base de l'insert, lors d'un procédé de moulage d'un élément de garniture. Dans une variante de réalisation d'un élément de garniture 39, la lamelle 50 et le corps 56 de l'élément de garniture sont obtenus d'un seul tenant lors d'un procédé d'usinage.

Tout ou partie des lamelles 50 s'étendent sensiblement axialement ou hélicoïdalement sur la surface radialement interne du moule. Une telle disposition des lamelles facilite leur démoulage. L'entaille ainsi formée sur la sculpture du pneumatique s'étend transversalement.

Par « un élément s'étendant sensiblement suivant une direction donnée », on entend que ledit élément comprend un profil médian suivant la direction donnée, le profil dudit élément s'écartant du profil médian d'une distance au plus égale à 50% de la longueur dudit élément.

Tout ou partie desdites lamelles 50 sont contiguës à une de leurs extrémités avec un élément en protubérance, et contiguës à l'autre de leurs extrémités avec un élément en creux ou avec l'autre partie du moule.

L'absence d'élément en creux 44 entre une lamelle 40 et l'élément en protubérance 46 permet d'éviter qu'une lamelle sectionne la gomme de la bande de roulement du pneumatique lors de l'ouverture du moule. Le démoulage du pneumatique s'en trouve facilité. De plus, les déformations excessives de la bande de roulement du pneumatique, lors du démoulage, sont ainsi évitées. Enfin, les lamelles sont moins sollicitées, et la fréquence des interventions nécessaires à leur réparation est réduite.

Tout ou partie desdites lamelles 50 sont mobiles par rapport au pneumatique dans le sillage de l'élément en protubérance 46.

Autrement dit, l'élément en protubérance 46 auquel une des extrémités de ladite lamelle 40 est contigu suit une trajectoire de démoulage 48 donnée. Ladite lamelle est mobile par rapport au pneumatique à la suite d'un élément en protubérance 46 lors de l'ouverture du moule. Ladite lamelle est disposée de telle manière qu'elle se démoule dans le volume libéré par ledit élément en protubérance lors de son démoulage.

De préférence, la profondeur de la lamelle 50 est inférieure ou égale à la profondeur de l'élément en protubérance 46.

Tout ou partie desdites lamelles 50 sont sensiblement centrées par rapport au plan médian 58 de la surface radialement interne 30 du moule, et s'étendent axialement sur une longueur comprise dans un domaine allant de 0 à 70% de la largeur de ladite surface et, de préférence, de 0 à 35% de la largeur de ladite surface.

Par « sensiblement centré », on entend qu'une lamelle 50 s'étend axialement dans une zone de la surface radialement interne 30 du moule centrée par rapport audit plan médian 58.

Tout ou partie desdites lamelles 50 comportent un raidisseur 60 prenant la forme d'un bourrelet s'étendant le long du contour libre de la lamelle. Le raidisseur permet d'éviter les déformations de ladite lamelle, tout en permettant l'intégration de contre-dépouilles sur ladite lamelle, dans la limite où son démoulage provoque une déformation élastique de la sculpture du pneumatique n'endommageant pas sa structure interne.

L'épaisseur du bourrelet 60 est inférieure ou égale à 300% de l'épaisseur d'une lamelle 50, et au maximum égale à 15 mm et, de préférence, à 200% de l'épaisseur d'une lamelle et au maximum égale à 10 mm.

Tout ou partie desdites lamelles 50 sont espacées d'une distance au moins égale à 150% de l'épaisseur du bourrelet et, de préférence, à 200% de l'épaisseur du bourrelet et, plus préférentiellement, à 250% de l'épaisseur du bourrelet et, encore plus préférentiellement, à 300% de l'épaisseur du bourrelet. L'espacement entre les lamelles permet d'éviter le pincement de la gomme de la sculpture entre deux entailles par lesdites lamelles et, plus particulièrement par leurs raidisseurs.

Les inventeurs ont mis en évidence que le démoulage des lamelles 50 est facilité quand tout ou partie desdites lamelles forment avec la trajectoire de démoulage 48 du pneumatique, un angle au plus égal à 45° et, de préférence, au plus égal à 30° et, encore plus préférentiellement, au plus égal à 15°. De la même façon, le démoulage est facilité lorsque tout ou partie desdites lamelles s'écartent de ladite direction au plus de six fois l'épaisseur d'une lamelle et, de préférence, de trois fois l'épaisseur d'une lamelle.

Dans une position de fermeture du moule, tout ou partie des lamelles 50 d'une partie du moule sont en insertion entre tout ou partie des lamelles de l'autre partie du moule, de telle manière que la ligne de joint 31 forme des ondulations 62 sur la surface radialement interne 30 du moule.

Ainsi, il est possible de disposer des lamelles 50 de part et d'autre du plan médian 58 de la surface radialement interne 30 du moule. Par ailleurs, l'extrémité d'une lamelle en insertion ou, dépassant ledit plan médian, peut être contiguë à un élément en creux 44, contrairement à un moule en deux parties dont les lamelles ne sont pas en insertion ou, dont le la ligne de joint 31 est comprise dans ledit plan médian. Ainsi, la variété des motifs possibles est élargie.

L'insertion des lamelles 50 s'étend axialement sur une longueur allant de 0 à 70% de la largeur de la surface radialement interne du moule et, de préférence, de 0 à 35% de la largeur de ladite surface. A titre d'exemple, la longueur des lamelles en insertion peut être inférieure à la longueur de la zone d'insertion desdites lamelles.

Chaque ondulation 62 regroupe entre une et dix lamelles 50 et, de préférence, entre deux et cinq lamelles. Le nombre de lamelles peut différer d'une ondulation à une autre. A titre d'exemple, chaque ondulation comporte trois lamelles. Un nombre de lamelles identiques d'une ondulation à une autre permet de mieux répartir les efforts de démoulage entre chaque partie de moule. Un nombre de lamelles important dans chaque ondulation permet de faciliter la fabrication du moule.

Les extrémités libres de deux lamelles 50 adjacentes, regroupées dans une même ondulation 62, sont espacées axialement d'une distance au moins égale à 30% de l'épaisseur du bourrelet et, de préférence, à 60% de l'épaisseur du bourrelet. Le décalage ainsi créé permet d'éviter le pincement de la gomme située entre deux entailles lors du démoulage des lamelles.

Les lamelles en insertion prennent la forme d'un chevron de déflection au plus égale à 45° et, de préférence, au plus égale à 30° et, plus préférentiellement, au plus égale à 15°, de telle manière que la distance espaçant les lamelles est sensiblement constante selon la direction circonférentielle de la surface radialement interne du moule. La densité de lamelle selon la direction circonférentielle peut ainsi être augmentée.
D'autres variantes et modes de réalisation de l'invention peuvent être envisagés sans sortir du cadre de ses revendications.

## Revendications

1. Moule (20) pour la vulcanisation de pneumatiques comprenant un axe central (22), une partie supérieure (24), et une partie inférieure (26),
le moule comportant une surface radialement interne (30) de moulage destinée à former la surface externe de tout ou partie de de la bande de roulement du pneumatique,
la partie supérieure et la partie inférieure étant mobiles axialement entre une position d'ouverture et une position de fermeture dans laquelle la partie inférieure et la partie supérieure sont jointives le long d'une ligne de joint (31) divisant la surface radialement interne en deux parties,
au moins une des deux parties (32, 34) de la surface radialement interne comportant au moins un motif (42) comprenant au moins un élément en creux (44) et un élément en protubérance (46),
le moule étant **caractérisé en ce que** chaque partie de moule comporte une pluralité de lamelles (50),
tout ou partie desdites lamelles s'étendant sensiblement axialement ou hélicoïdalement sur la surface radialement interne (30) du moule,
tout ou partie desdites lamelles étant :
- contiguës à une de leurs extrémités avec l'élément en protubérance (46) et contiguës à l'autre de leurs extrémités avec l'élément en creux (44) ou avec l'autre partie du moule,
- mobiles par rapport au pneumatique dans le sillage de l'élément en protubérance, lors de l'ouverture du moule.

2. Moule selon la revendication précédente dans lequel tout ou partie desdites lamelles (50) sont sensiblement centrées par rapport au plan médian (58) de la surface radialement interne (30) du moule, et s'étendent axialement sur une longueur comprise dans un domaine allant de 0 à 70% de la largeur de ladite surface et, de préférence, de 0 à 35% de la largeur de ladite surface.

3. Moule selon l'une des revendications précédentes dans lequel tout ou partie desdites lamelles (50) comportent un raidisseur (60) prenant la forme d'un bourrelet s'étendant le long du contour libre de la lamelle.

4. Moule selon la revendication précédente dans lequel l'épaisseur du bourrelet (60) est inférieure ou égale à 300% de l'épaisseur d'une lamelle (50) et au maximum égale à 15 mm, et, de préférence, à 200% de l'épaisseur d'une lamelle et au maximum égale à 10 mm.

5. Moule selon la revendication précédente dans lequel tout ou partie desdites lamelles (50) sont espacées d'une distance au moins égale à 150% de l'épaisseur du bourrelet (60) et, de préférence, à 250% de l'épaisseur du bourrelet.

6. Moule selon l'une des revendications précédentes dans lequel tout ou partie desdites lamelles forment avec une direction de démoulage (48) du pneumatique, un angle au plus égal à 30° et, de préférence, au plus égal à 15°.

7. Moule selon l'une des revendications précédentes dans lequel tout ou partie desdites lamelles (50) s'écartent de la direction de démoulage (48) du pneumatique au plus de 6 fois l'épaisseur d'une lamelle et, de préférence, de trois fois l'épaisseur d'une lamelle.

8. Moule selon l'une des revendications précédentes dans lequel tout ou partie des lamelles (50) d'une partie (24, 26) du moule sont en insertion entre tout ou partie des lamelles de l'autre partie (24, 26) du moule, dans une position de fermeture du moule, de telle manière que la ligne de joint (31) forme des ondulations (62) sur la surface radialement interne (30) du moule.

9. Moule selon la revendication précédente dans lequel l'insertion des lamelles (50) s'étend axialement sur une longueur allant de 0 à 70% de la largeur de la surface radialement interne (30) du moule et, de préférence, de 0 à 35% de la largeur de ladite surface.

10. Moule selon la revendication précédente dans lequel chaque ondulation (62) regroupe entre une et dix lamelles (50) et, de préférence, entre deux et cinq lamelles.

11. Moule selon l'une des revendications précédentes dans lequel les extrémités libres de deux lamelles (50) adjacentes, regroupées dans une même ondulation (62), sont espacées axialement d'une distance au moins égale à 200% de l'épaisseur du bourrelet (60) et, de préférence, à 300% de l'épaisseur du bourrelet.

12. Moule selon l'une des revendications précédentes dans lequel les lamelles (50) en insertion prennent la forme d'un chevron de déflection au plus égale à 30° et, de préférence, au plus égale à 15° de telle manière que la distance espaçant les lamelles est sensiblement constante selon la direction circonférentielle de la surface radialement interne (30) du moule.

13. Procédé de vulcanisation d'un pneumatique utilisant un moule pour la vulcanisation de pneumatique selon l'une des revendications 1 à 12.

## Patentansprüche

1. Form (20) zur Vulkanisierung von Reifen, umfassend eine Mittelachse (22), einen oberen Teil (24) und einen unteren Teil (26),
wobei die Form eine radial innere Formfläche (30) aufweist, die dazu bestimmt ist, die Außenfläche des Laufstreifens des Reifens oder eines Teils davon auszubilden,
wobei der obere Teil und der untere Teil zwischen einer offenen Position und einer geschlossenen Position, in der der untere Teil und der obere Teil entlang einer Verbindungslinie (31), die die radial innere Fläche in zwei Teile teilt, aneinanderstoßen, axial bewegbar sind, wobei mindestens einer der beiden Teile (32, 34) der radial inneren Fläche mindestens ein Muster (42) aufweist, das mindestens ein vertieftes Element (44) und ein vorstehendes Element (46) umfasst,
wobei die Form **dadurch gekennzeichnet ist, dass** jeder Formteil mehrere Lamellen (50) aufweist,
wobei sich alle Lamellen oder ein Teil davon im Wesentlichen axial oder spiralförmig über die radial innere Fläche (30) der Form erstrecken, wobei alle Lamellen oder ein Teil davon:
- an einem ihrer Enden an das vorstehende Element (46) und am anderen ihrer Enden an das vertiefte Element (44) oder an den anderen Teil der Form angrenzen,
- beim Öffnen der Form in Bezug auf den Reifen im Bereich des vorstehenden Elements beweglich sind.

2. Form nach dem vorangehenden Anspruch, wobei alle oder einige der Lamellen (50) in Bezug auf die Mittelebene (58) der radial inneren Fläche (30) der Form im Wesentlichen zentriert sind und sich axial über eine Länge erstrecken, die im Bereich von 0 bis 70 ö der Breite der Fläche und vorzugsweise 0 bis 35 ö der Breite der Fläche liegt.

3. Form nach einem der vorangehenden Ansprüche, wobei alle oder einige der Lamellen (50) eine Versteifung (60) aufweisen, die die Form einer Wulst aufweisen, die sich entlang der freien Kontur der Lamelle erstreckt.

4. Form nach dem vorangehenden Anspruch, wobei die Dicke der Wulst (60) 300 ö der Dicke einer Lamelle (50) oder weniger und höchstens 15 mm und vorzugsweise 200 ö der Dicke einer Lamelle und höchstens 10 mm beträgt.

5. Form nach dem vorangehenden Anspruch, wobei alle oder einige der Lamellen (50) um einen Abstand von mindestens 150 ö der Dicke der Wulst (60) und vorzugsweise 250 ö der Dicke der Wulst voneinander beabstandet sind.

6. Form nach einem der vorangehenden Ansprüche, wobei alle oder einige der Lamellen mit einer Entformungsrichtung (48) des Reifens einen Winkel von höchstens 30° und vorzugsweise höchstens 15° bilden.

7. Form nach einem der vorangehenden Ansprüche, wobei alle oder einige der Lamellen (50) von der Entformungsrichtung (48) des Reifens um höchstens die 6-fache Dicke einer Lamelle und vorzugsweise die 3-fache Dicke einer Lamelle abweichen.

8. Form nach einem der vorangehenden Ansprüche, wobei alle oder einige der Lamellen (50) eines Teils (24, 26) der Form in einer geschlossenen Position der Form zwischen alle oder einige der Lamellen des anderen Teils (24, 26) der Form eingefügt sind, sodass die Verbindungslinie (31) auf der radial inneren Fläche (30) der Form Wellen (62) bildet.

9. Form nach dem vorangehenden Anspruch, wobei sich der Einsatz der Lamellen (50) axial über eine Länge erstreckt, die 0 bis 70 ö der Breite der radial inneren Fläche (30) der Form und vorzugsweise 0 bis 35 ö der Breite der Fläche beträgt.

10. Form nach dem vorangehenden Anspruch, wobei jede Welle (62) zwischen einer und zehn Lamellen (50) und vorzugsweise zwischen zwei und fünf Lamellen zusammenfasst.

11. Form nach einem der vorangehenden Ansprüche, wobei die freien Enden zweier benachbarter Lamellen (50), die in einer selben Welle (62) zusammengefasst sind, axial um einen Abstand von mindestens 200 ö der Dicke der Wulst (60) und vorzugsweise 300 ö der Dicke der Wulst voneinander beabstandet sind.

12. Form nach einem der vorangehenden Ansprüche, wobei die eingesetzten Lamellen (50) eine Zickzackform mit einer Ablenkung von höchstens 30° und vorzugsweise höchstens 15° aufweisen, so dass der Abstand zwischen den Lamellen in der Umfangsrichtung der radial inneren Fläche (30) der Form im Wesentlichen konstant ist.

13. Verfahren zur Vulkanisierung eines Reifens unter Verwendung einer Form zur Vulkanisierung von Reifen nach einem der Ansprüche 1 bis 12.

## Claims

1. Mould (20) for vulcanizing tyres, comprising a central axis (22), an upper part (24), and a lower part (26),
the mould having a radially internal moulding surface (30) intended to form the external surface of all or part of the tread of the tyre,
the upper part and the lower part being able to move axially between an open position and a closed position in which the lower part and the upper part meet along a joint line (31) that divides the radially internal surface into two parts,
at least one of the two parts (32, 34) of the radially internal surface having at least one pattern (42) comprising at least one recessed element (44) and one protruding element (46),
the mould being **characterized in that** each mould part has a plurality of sipe blades (50),
all or some of said sipe blades extending substantially axially or helically on the radially internal surface (30) of the mould,
all or some of said sipe blades being:
- contiguous at one of their ends with the protruding element (46) and contiguous at the other of their ends with the recessed element (44) or with the other part of the mould,
- able to move relative to the tyre in the wake of the protruding element, during opening of the mould.

2. Mould according to the preceding claim, wherein all or some of said sipe blades (50) are substantially centred with respect to the median plane (58) of the radially internal surface (30) of the mould, and extend axially over a length in a range from 0 to 70% of the width of said surface and, preferably, from 0 to 35% of the width of said surface.

3. Mould according to one of the preceding claims, wherein all or some of said sipe blades (50) have a stiffener (60) that takes the form of a bulge extending along the free contour of the sipe blade.

4. Mould according to the preceding claim, wherein the thickness of the bulge (60) is less than or equal to 300% of the thickness of a sipe blade (50) and at most equal to 15 mm, and, preferably, less than or equal to 200% of the thickness of a sipe blade and at most equal to 10 mm.

5. Mould according to the preceding claim, wherein all or some of said sipe blades (50) are spaced apart by a distance at least equal to 150% of the thickness of the bulge (60) and, preferably, to 250% of the thickness of the bulge.

6. Mould according to one of the preceding claims, wherein all or some of said sipe blades form, with a demoulding direction (48) of the tyre, an angle at most equal to 30° and, preferably, at most equal to 15°.

7. Mould according to one of the preceding claims, wherein all or some of said sipe blades (50) deviate from the demoulding direction (48) of the tyre by at most six times the thickness of a sipe blade and, preferably, by three times the thickness of a sipe blade.

8. Mould according to one of the preceding claims, wherein all or some of the sipe blades (50) of one part (24, 26) of the mould are inserted between all or some of the sipe blades of the other part (24, 26) of the mould, in a position in which the mould is closed, such that the joint line (31) forms corrugations (62) on the radially internal surface (30) of the mould.

9. Mould according to the preceding claim, wherein the insertion of the sipe blades (50) extends axially over a length from 0 to 70% of the width of the radially internal surface (30) of the mould and, preferably, from 0 to 35% of the width of said surface.

10. Mould according to the preceding claim, wherein each corrugation (62) groups together between one and ten sipe blades (50) and, preferably, between two and five sipe blades.

11. Mould according to one of the preceding claims, wherein the free ends of two adjacent sipe blades (50), grouped together in a single corrugation (62), are axially spaced apart by a distance at least equal to 200% of the thickness of the bulge (60) and, preferably, to 300% of the thickness of the bulge.

12. Mould according to one of the preceding claims, wherein the inserted sipe blades (50) take the form of a chevron with a deflection at most equal to 30° and, preferably, at most equal to 15° such that the distance between the sipe blades is substantially constant in the circumferential direction of the radially internal surface (30) of the mould.

13. Method for vulcanizing a tyre using a mould for vulcanizing a tyre according to one of Claims 1 to 12.
